Europäisches Patentamt

European Patent Office

Office européen des brevets

(11) Numéro de publication : **0 336 837 B1**

## (12) FASCICULE DE BREVET EUROPEEN

(45) Date de publication du fascicule du brevet :
22.07.92 Bulletin 92/30

(51) Int. Cl.⁵ : **F16B 7/10**

(21) Numéro de dépôt : **89400931.5**

(22) Date de dépôt : **05.04.89**

(54) **Dispositif de blocage automatique de tubes téléscopiques en position déployée.**

(30) Priorité : **05.04.88 FR 8804458**

(43) Date de publication de la demande :
**11.10.89 Bulletin 89/41**

(45) Mention de la délivrance du brevet :
**22.07.92 Bulletin 92/30**

(84) Etats contractants désignés :
**AT BE CH DE ES FR GB GR IT LI LU NL SE**

(56) Documents cités :
**DE-A- 3 204 977**
**FR-A- 418 616**

(73) Titulaire : **BERTIN & CIE**
**Zone Industrielle Boîte postale 3**
**F-78373 Plaisir Cédex (FR)**

(72) Inventeur : **Bardot, Michel**
**Le Verger des Bois**
**F-84530 Villelaure (FR)**
Inventeur : **Boquet, Jean**
**4 Allée du Grand Amiral**
**F-78160 Le Perray en Yvelines (FR)**

(74) Mandataire : **Ramey, Daniel et al**
**Cabinet Ores 6 Avenue de Messine**
**F-75008 Paris (FR)**

# Description

L'invention concerne un dispositif de blocage automatique de tubes télescopiques en position déployée, qui permet d'assurer une solidarisation totale, notamment du point de vue de la rigidité, entre deux tubes successifs dans leur position déployée.

Dans la technique actuelle, les ensembles de tubes télescopiques déployables sont pourvus de moyens de blocage en position déployée qui, selon les réalisations, sont à action automatique mais n'assurent pas une solidarisation totale des tubes, ou bien sont à serrage manuel et ne peuvent donc être utilisés que pour certaines applications.

On connait, par le document DE-A-32 04977, un dispositif de blocage automatique de tubes télescopiques en position déployée, comprenant deux bagues montées l'une autour d'une extrémité d'un tube interne et l'autre à l'intérieur d'un tube externe, ces bagues présentant l'une une surface interne tronconique et l'autre une surface externe tronconique qui sont conjuguées l'une de l'autre de sorte qu'en position rétractée des tubes, les bagues sont écartées l'une de l'autre, et dans la position déployée des tubes, les deux bagues se chevauchent et sont en contact par leurs surfaces tronconiques en étant serrées l'une sur l'autre et sur les tubes pour les immobiliser en position.

Cependant, dans ce dispositif antérieur, les deux bagues sont sensiblement indéformables et ne coopèrent que par effet de coincement, de sorte que la position d'un tube par rapport à l'autre dépend de l'effort exercé sur les tubes pour les déployer. En outre, il suffit d'exercer une poussée sur ces tubes pour les ramener en position rétractée.

L'invention a pour objet un dispositif de blocage automatique de tubes télescopiques en position déployée, qui permette une solidarisation totale et particulièrement rigide de deux tubes successifs, qui soit efficace dès la fin du déploiement des tubes et qui, dans sa position de repos, ne s'oppose pas au déploiement des tubes, l'effort de coulissement des tubes les uns dans les autres devant rester aussi faible que possible.

Le dispositif selon l'invention comprend, pour chaque ensemble de deux tubes télescopiques, deux bagues montées l'une autour de l'extrémité d'un tube interne et l'autre à l'intérieur d'un tube externe à son extrémité traversée par le tube interne, ces bagues présentant l'une une surface interne tronconique et l'autre une surface externe tronconique qui sont conjuguées l'une de l'autre, de sorte qu'en position rétractée des tubes, les bagues sont écartées l'une de l'autre et, dans la position déployée des tubes, les deux bagues se chevauchent et sont en contact par leurs surfaces tronconiques, en étant serrées l'une sur l'autre et sur les tubes pour les immobiliser en position, le dispositif étant caractérisé en ce que chaque bague comprend une ou plusieurs fentes longitudinales permettant son expansion et sa contraction radiales.

Ainsi, lorsque les tubes sont en position déployée et que les deux bagues se chevauchent, on obtient par effet de coin une solidarisation totale, sans jeu, des tubes déployés et un serrage progressif et particulièrement efficace des deux bagues l'une sur l'autre et sur les tubes, grâce à la possibilité d'expansion et de contraction radiales des bagues.

En outre, ce dispositif permet d'amortir automatiquement et progressivement la fin du mouvement de déploiement des tubes.

Selon une autre caractéristique de l'invention, la bague associée au tube externe a une surface interne cylindrique et une surface externe tronconique qui va en s'élargissant du côté de l'extrémité du tube externe traversée par le tube interne, tandis que la bague associée au tube interne a une surface extérieure cylindrique et une surface interne tronconique, conjuguée de celle de l'autre bague.

Grâce à cette caractéristique, la solidarisation des tubes en position déployée est totale, et un effort de poussée exercé sur les tubes ne permet pas de les rétracter l'un à l'intérieur de l'autre.

Selon encore une autre caractéristique de l'invention, chaque bague est en butée sur un épaulement du tube auquel elle est associée.

On est ainsi assuré, lors du déploiement des tubes, d'amener les deux bagues l'une sur l'autre pour leur serrage.

Selon encore une autre caractéristique de l'invention, chaque bague est montée libre en translation par rapport au tube associé, et comporte au moins un ergot radial en saillie engagé dans une rainure ou gorge circulaire du tube, ce qui permet de maintenir la bague à l'extrémité voulue du tube associé.

Ce montage assure un coulissement facile des tubes télescopiques les uns par rapport aux autres, jusqu'au voisinage de leur position de déploiement complet.

Par ailleurs, et pour maintenir les tubes en position déployée quel que soit l'effort de rétraction qui leur est appliqué, l'invention prévoit que chaque bague comprend des moyens de blocage en position de serrage, qui coopèrent dans cette position avec le tube associé à l'autre bague.

Par exemple, les moyens de blocage d'une bague comprennent une ou plusieurs dents formées en saillie sur la surface de la bague qui est tournée vers la surface du tube associé à l'autre bague, tandis que cette surface de tube comprend des rainures transversales dans lesquelles s'engage la ou les dents précitées quand les bagues sont en position de serrage.

Avantageusement, chaque dent peut avoir un profil disymétrique auquel correspond un profil disymétrique de la rainure, pour autoriser un déplacement de la bague dans le sens correspondant au déploiement des tubes, et interdire le déplacement de la bague en sens contraire.

En variante, les moyens de blocage comprennent, sur la surface de la bague tournée vers la surface du tube associé à l'autre bague, une gorge annulaire à section en V disymétrique comprenant une face oblique et une face sensiblement perpendiculaire à l'axe des tubes, et des billes logées dans cette gorge et venant au contact de la face oblique de la gorge et de ladite surface de tube.

Selon encore une autre variante, la surface de chaque bague opposée à la surface tronconique précitée, est elle-même de forme tronconique avec un angle au sommet plus faible que celui de la première surface tronconique citée, et s'applique en position de serrage des bagues sur une surface tronconique conjuguée formée sur la surface de tube en regard.

Toutes ces variantes de réalisation assurent le blocage des tubes en position déployée, et interdisent le retour des tubes en position rétractée.

De plus, ces moyens de blocage ont pour effet d'augmenter le serrage des bagues entre elles et sur les tubes en présence d'un effort de traction ou de compression appliqué au tube interne.

Pour permettre le retour des tubes en position rétractée, on peut prévoir que l'extrémité du tube externe est formée par un embout vissé, qui est démontable pour permettre l'accès aux bagues et leur desserrage.

L'invention sera mieux comprise, et d'autres détails, caractéristiques et avantages de celle-ci apparaîtront au cours de la description explicative qui suit, faite à titre d'exemple en référence aux dessins annexés et dans lesquels:

– la figure 1 est une demi-vue schématique en coupe axiale de deux tubes télescopiques équipés d'un dispositif selon l'invention, les tubes n'étant pas en position complètement déployée;

– la figure 2 est une vue semblable à la figure 1, mais représente les tubes en position déployée;

– la figure 3 est une demi-vue schématique d'une des bagues du dispositif selon l'invention;

– la figure 4 est une vue schématique correspondant à la figure 2, mais représente une variante de réalisation du dispositif selon l'invention;

– la figure 5 est une vue schématique en perspective d'une des bagues du dispositif de la figure 4;

– les figures 6 et 7 sont des vues semblables aux figures 2 et 4, mais représentent deux autres variantes de réalisation de l'invention.

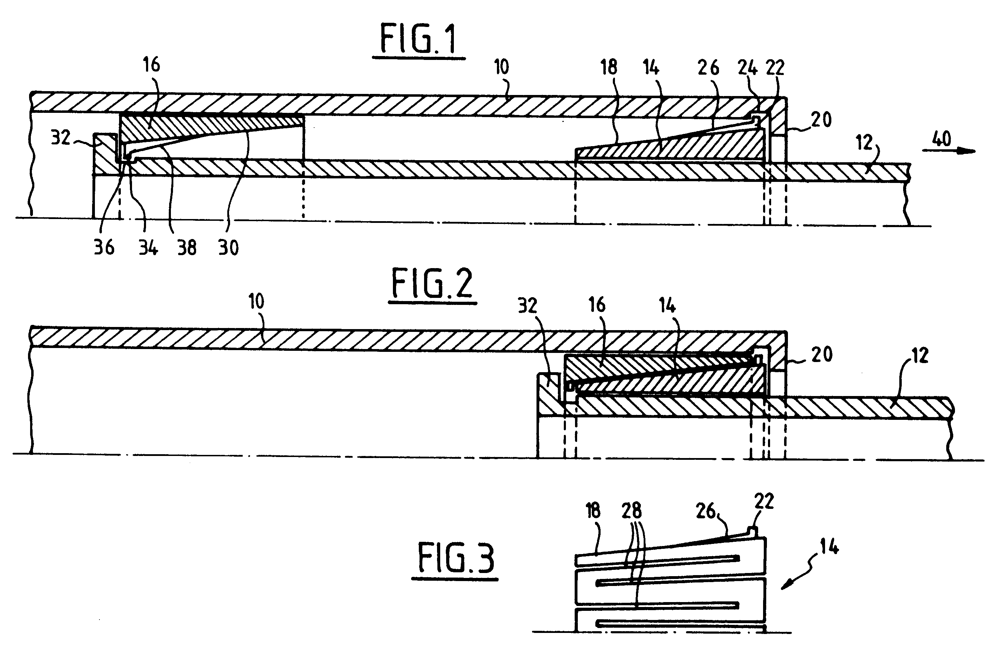

On se réfère d'abord aux figures 1 à 3, représentant une première forme de réalisation de l'invention.

On a représenté dans les figures 1 et 2 deux tubes télescopiques 10 et 12, qui sont cylindriques à section circulaire, le tube interne 12 étant par exemple mobile en coulissement axial par rapport au tube externe 10.

Chaque tube 10, 12 est associé à une bague 14, 16 respectivement placée dans l'intervalle annulaire entre les deux tubes 10 et 12.

La bague 14 associée au tube externe 10 comprend une surface interne cylindrique à section circulaire, d'un diamètre légèrement supérieur au diamètre externe du tube 12, et une surface externe tronconique 18 qui va en s'élargissant en direction de l'extrémité du tube externe 10 traversée par le tube interne 12. Cette extrémité du tube externe 10 comprend un rebord ou épaulement radial interne 20 formant une butée d'appui de la bague 14. Celle-ci comprend des ergots 22 en saillie sur sa surface externe, au voisinage de son extrémité de plus grand diamètre, qui sont régulièrement répartis sur sa périphérie et qui s'engagent dans une gorge ou rainure annulaire 24 de la surface interne du tube 10, adjacente au rebord de butée 20, pour maintenir la bague 14 à l'extrémité du tube 10 qui est traversée par le tube interne 12. Chaque ergot 22 peut être formé à l'extrémité d'un doigt longitudinal 26 de la bague, élastiquement déformable.

La bague 14 doit elle-même être capable d'expansion et/ou de contraction radiale et comprend à cet effet des fentes longitudinales 28 s'étendant alternativement d'une extrémité de la bague jusqu'au voisinage de son extrémité opposée, comme représenté en figure 3.

La bague 16 associée au tube interne 12 a une forme conjuguée de celle de la bague 14 associée au tube 10, c'est-à-dire que la bague 16 présente une surface extérieure cylindrique à section circulaire, ayant un diamètre légèrement inférieur au diamètre interne du tube 10, et une surface intérieure tronconique 30 conjuguée de la surface tronconique 18 de la bague 14.

L'extrémité du tube 12, située à l'intérieur du tube 10, comprend un rebord ou un épaulement radial externe 32, formant butée d'appui de la bague 16. Celle-ci est maintenue sur cette extrémité du tube 12 par des ergots 34 formés radialement en saillie vers l'intérieur sur sa surface interne, et qui s'engagent dans une rainure ou gorge annulaire 36 de la surface externe du tube 12. Les ergots 34 de la bague 16 correspondent aux ergots 22 de la bague 14 et peuvent être formés à l'extrémité de doigts élastiquement déformables 38 de la bague 16.

Comme la bague 14, la bague 16 est capable d'expansion et/ou de contraction radiale et comprend avantageusement des fentes longitudinales semblables aux fentes 28 de la bague 14. Le dispositif fonctionne de la façon suivante:

Lorsque le tube 12 est déplacé en coulissement par rapport au tube 10 dans le sens indiqué par la flèche 40 en figure 1, son rebord d'extrémité 32 déplace avec lui la bague 16 qui coulisse à l'intérieur du tube 10 jusqu'à venir dans la position représentée en figure 2 où elle recouvre à peu près complètement la bague 14 associée au tube 10. Par effet de coin entre les surfaces tronconiques 18 et 30 des deux bagues, on réalise à la fin du mouvement de déploiement du tube 12 le serrage des deux bagues 14 et 16 l'une sur l'autre, la bague 14 étant comprimée radialement sur le tube 12, tandis que la bague 16 est expansée radialement et serrée sur le tube 10. On obtient ainsi une immobilisation du tube 12 en position déployée, et une solidarisation sans jeu particulièrement rigide des deux tubes. La compression radiale de la bague 14 et l'expansion radiale de la bague 16 se traduisent également par un amortissement de la fin du mouvement de déploiement du tube 12. En outre, dans la position de blocage, les ergots 22 de la bague 14 sont rétractés vers l'intérieur de cette bague et dégagés de la rainure annulaire 24 du tube 10, tandis que, de façon correspondante, les ergots 34 de la bague 16 sont repoussés vers l'extérieur et dégagés de la rainure annulaire 36 de l'extrémité du tube 12. L'escamotage des doigts élastiquement déformables 26 et 38 portant ces ergots participe également à l'amortissement de la fin du mouvement de déploiement du tube 12. Toutefois, si on le désire, on peut modifier la forme des doigts 26 et 38 pour qu'ils ne fassent plus saillie sur les surface tronconiques des bagues 14 et 16 et que les ergots 22 et 34 restent engagés dans les rainures 24 et 36 des tubes dans la position de serrage des bagues représentée en figure 2.

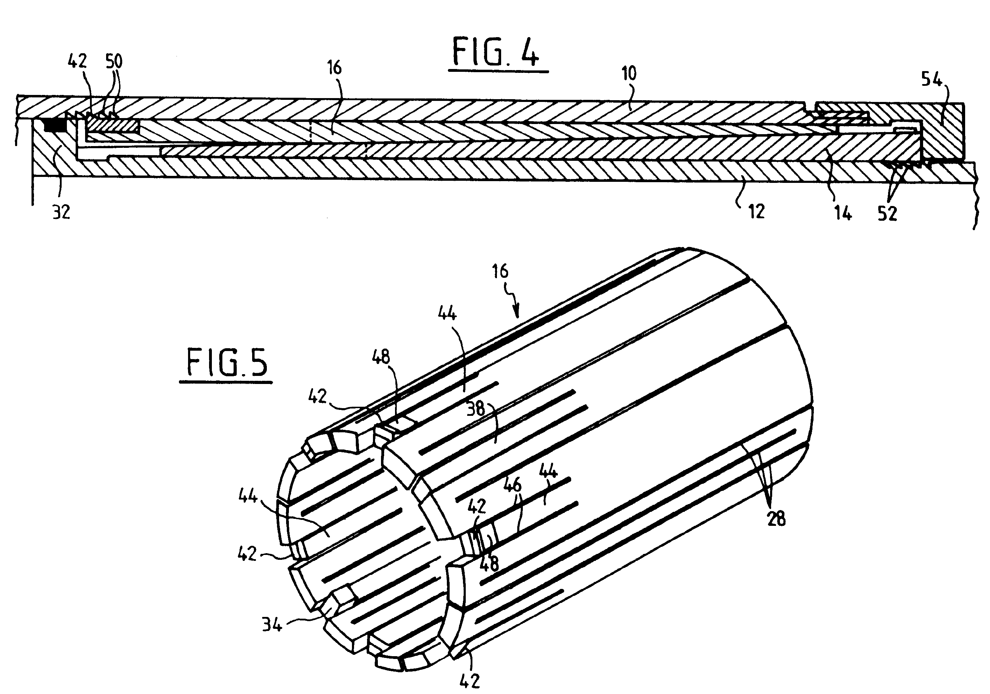

On se réfère maintenant aux figures 4 et 5, représentant une variante de réalisation du dispositif selon l'invention.

Dans cette variante, les tubes 10 et 12 sont équipés de bagues 14 et 16 semblables à celles représentées dans les figures 1 et 2, mais qui comprennent en outre des moyens de blocage en position de serrage, pour interdire la rétraction du tube 12 à l'intérieur du tube 10 et augmenter le serrage quand une traction ou une compression longitudinale est appliquée au tube 12.

En ce qui concerne la bague 16 représentée en figure 5, ces moyens de blocage comprennent des dents 42 en saillie sur la surface externe cylindrique de la bague 16, portées par des doigts élastiquement déformables 44 à l'extrémité de la bague 16 tournée du côté du rebord de butée 32 du tube 12. Les doigts déformables 44 sont définis, comme on le voit en figure 5, entre deux fentes longitudinales 46 de la bague 16. Pour plus de résistance, les dents 42 peuvent être formés chacune par une pièce en acier 48 rapportée sur l'extrémité libre du doigt déformable 44 correspondant.

Les dents 42 de la bague 16 sont destinées à s'engager dans des rainures annulaires 50 de forme correspondante de la surface cylindrique interne du tube 10. On peut prévoir par exemple 4 à 5 rainures 50 adjacentes, tandis que les dents 42 peuvent être au nombre de six, régulièrement réparties sur la périphérie de la bague 16, deux dents 42 diamétralement opposées étant décalées longitudinalement l'une par rapport à l'autre d'une fraction de pas (distance séparant deux rainures 50 consécutives) pour assurer une pénétration maximale d'au moins certaines des dents 42 dans les rainures 50 en dépit des petites variations de position de la bague 16 par rapport au tube 10 dans l'état déployé des tubes télescopiques.

De façon correspondante, l'autre bague 14 comprend, à son extrémité adjacente au rebord annulaire 20 du tube 10, des dents formées en saillie sur sa surface cylindrique interne et destinées à pénétrer dans des rainures annulaires 52 de la surface externe du tube 12.

Comme on le voit en figure 4, les dents 42 et les rainures 50 peuvent avoir une section en V disymétrique, avec une face arrière sensiblement perpendiculaire à l'axe des tubes et une face avant inclinée en oblique sur cet axe, de telle sorte que la bague 16 puisse être déplacée par rapport au tube 10 dans le sens de déploiement du tube 12, mais ne puisse être déplacée en sens inverse. De façon correspondante, les dents de la bague 14 et les rainures 52 de la surface extérieure du tube 12 présenteront une face avant sensiblement perpendiculaire à l'axe des tubes et une face arrière inclinée en oblique.

Ainsi, lorsque les bagues 14 et 16 sont dans la position de blocage représentée en figure 4, et que les dents 42 de la bague 16 sont engagées dans les rainures 50 du tube 10, les dents correspondantes de la bague 14 étant engagées dans les rainures 52 du tube 12, une rétraction de ce tube à l'intérieur du tube 10 est rendue impossible.

Pour permettre cette rétraction lorsque cela est nécessaire, l'extrémité du tube 10 peut être formée par un embout vissable 54 traversé axialement par le tube 12. Le fond de cet embout forme le bord de butée de la bague 14. Par dévissage de l'embout, on peut sortir l'ensemble du tube 12 et des bagues 14 et 16. L'extrémité 32 du tube 12 est formée par un embout vissé, que l'on dévisse pour le déserrage des bagues.

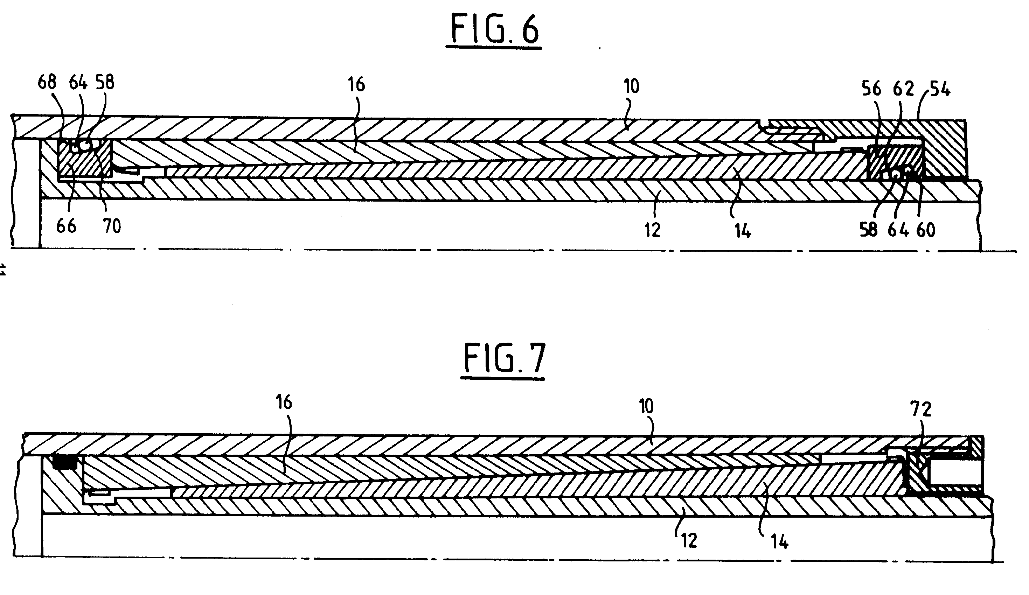

On se réfère maintenant à la figure 6 représentant une variante de réalisation de ces moyens de blocage. Selon cette variante, les moyens de blocage sont constitués par une bague à billes, associée à chacune des bagues de serrage 14, 16. La bague 56 à billes 58 associée à l'extrémité avant de la bague de serrage 14 entoure le tube interne 12 et comprend sur sa surface interne une rainure annulaire de réception des billes 58 qui est définie par une face avant 60 sensiblement perpendiculaire à l'axe des deux tubes et une face arrière ou un fond tronconique 62 dont le diamètre va en se rétrécissant vers la bague de serrage 14. Un joint torique 64 élastiquement déformable est placé dans le fond de cette rainure, pour maintenir les billes 58 en appui sur la face tronconique 62 d'une part et sur la surface externe du tube 12 d'autre part.

De façon correspondante, la bague de serrage 16 est associée à son extrémité arrière à une bague 66 dont la surface externe comporte une rainure de réception de billes 58 et est définie par une face arrière 68 sensiblement perpendiculaire à l'axe des tubes et une face ou fond tronconique 70 dont le diamètre va en se rétrécissant dans la direction de la bague 16. Un joint torique 64 reçu au fond de cette rainure maintient les billes 68 en appui sur la face tronconique 70 d'une part, et sur la surface interne du tube 10 d'autre part.

Les inclinaisons des faces tronconiques 62 et 70 des bagues 56 et 66 sont telles, par rapport au sens de déploiement du tube 12, qu'elles autorisent le déploiement de ce tube mais interdisent son retour à l'intérieur du tube 10 par coincement des billes entre les bagues et les tubes.

Comme dans le mode de réalisation précédent, l'extrémité du tube 10 est formée par un embout vissé 54, que l'on peut dévisser pour sortir l'ensemble du tube 12 et des bagues 14 et 16.

On se réfère maintenant à la figure 7, représentant une autre variante de réalisation de moyens de blocage des bagues 14 et 16 sur leur position de serrage.

Dans cette variante, la bague 14 associée au tube extérieur 10 est sensiblement identique à la bague 14 des figures 1 et 2, mais sa surface interne, au lieu d'être cylindrique, est légèrement tronconique, son diamètre allant en s'élargissant vers l'avant, en direction de l'extrémité libre du tube 10 traversée par le tube interne 12. La surface externe du tube interne 12, qui est en contact avec la surface interne de la bague 14 dans la position déployée du tube 12, est elle aussi légèrement tronconique, en étant conjuguée de la surface interne de la bague 14.

De même, la surface externe de la bague 16 associée au tube interne 12, au lieu d'être cylindrique, est légèrement tronconique, son diamètre allant en s'élargissant vers l'avant, c'est-à-dire en direction de l'extrémité libre du tube 10 traversée par le tube interne 12. La surface interne du tube 10, qui est au contact de la surface externe de la bague 16, est également tronconique, en étant conjuguée de la surface externe de la bague 16.

Lorsque les bagues 14 et 16 sont dans la position de serrage représentée en figure 7, la surface interne de la bague 14 est en appui, sur toute sa longueur, sur la surface externe tronconique du tube 12, tandis que la surface externe de la bague 16 est appui sur toute sa longueur sur la surface interne tronconique du tube 10. On réalise ainsi, par effet de coin, un blocage interdisant la rétraction ou le retour du tube 12 à l'intérieur du tube 10.

L'extrémité du tube 10 est formée par un manchon vissé 72 qu'il suffit de démonter pour extraire la bague 14 et autoriser le retour du tube 12 à l'intérieur du tube 10.

Il n'est pas nécessaire que la conicité de la surface interne de la bague 14 et de la surface externe de la bague 16 soit très importante. Cette conicité peut être par exemple de l'ordre de 1,25 %, tandis que la conicité de la surface externe de la bague 14 et de la surface interne de la bague 16 est de l'ordre de 5 %.

Pour permettre un déblocage rapide des tubes en position déployée, on peut prévoir que l'embout vissé 72 est remplacé par l'embout 54 de la figure 6, comprenant la rainure ou gorge annulaire dans laquelle s'engagent les ergots 22 de la bague 14, que ces ergots resteront engagés dans cette gorge au serrage des bagues et que la gorge comprend par exemple une partie hélicoïdale par rapport à l'axe des tubes. Ainsi, par dévissage de l'embout, on extrait automatiquement la bague 14, au moyen de ses ergots engagés dans ladite gorge. La bague 16 est quant à elle maintenue en place par ses ergots 34 engagés dans le gorge 36 du tube 12.

Les deux bagues 14 et 16 sont réalisées par exemple en alliage léger.

De façon générale, le dispositif selon l'invention permet un blocage rigide des tubes en position déployée dès la fin du déploiement, ce blocage étant maintenu et renforcé lorsqu'une force extérieure est appliquée aux tubes, soit dans le sens du déploiement, soit dans le sens contraire. En outre, l'effort qu'il faut appliquer au tube 12 pour le faire coulisser par rapport au tube 10 reste faible, la fin de la course de déploiement étant automatiquement amortie. De plus, le mode de réalisation de la figure 7 permet un blocage progressif des tubes 10 et 12, ainsi qu'un rattrapage automatique des tolérances dimensionnelles dues à diverses causes (tolérances de fabrication, variations dimensionnelles provoquées par une variation de température, variation des efforts de déploiement).

## Revendications

1. Dispositif de blocage automatique de tubes télescopiques en position déployée, comprenant deux bagues (14, 16) montées l'une autour d'une extrémité d'un tube interne (12) et l'autre à l'intérieur d'un tube externe (10) à son extrémité traversée par le tube interne (12), ces bagues présentant l'une une surface interne tronconique (30) et l'autre une surface externe tronconique (18) qui sont conjuguées l'une de l'autre, de sorte que, en position rétractée des tubes, les bagues sont écartées l'une de l'autre et, dans la position déployée des tubes, les deux bagues se chevauchent et sont en contact par leurs surfaces tronconiques, en étant serrées l'une sur l'autre et sur les tubes pour les immobiliser en position, caractérisé en ce que chaque bague (14, 16) comprend une ou plusieurs fentes (28) longitudinales permettant son expansion et sa contraction radiales.

2. Dispositif selon la revendication 1, caractérisé en ce que la bague (14) associée au tube externe (10) a une surface interne cylindrique et une surface externe tronconique (18) qui va en s'élargissant du côté de l'extrémité du tube externe (10) traversée par le tube interne (12), tandis que la bague (16) associée au tube interne (12) a une surface extérieure cylindrique et une surface interne tronconique (30), conjuguée de celle (18) de l'autre bague (14).

3. Dispositif selon la revendication 1 ou 2, caractérisé en ce que chaque bague (14, 16) est en butée sur un épaulement (20, 32) du tube (10, 12) auquel elle est associée.

4. Dispositif selon l'une des revendications 1 à 3, caractérisé en ce que chaque bague (14, 16) est montée libre en translation par rapport au tube (10, 12) associé et comporte au moins un ergot radial (22, 34) en saillie engagé dans une rainure ou gorge circulaire (24, 36) du tube, pour maintenir la bague à l'extrémité de ce tube.

5. Dispositif selon l'une des revendications 1 à 4, caractérisé en ce que chaque bague (14, 16) comprend des moyens (42, 56, 66) de blocage en position de serrage, qui coopèrent dans cette position avec le tube (12, 10) associé à l'autre bague.

6. Dispositif selon la revendication 5, caractérisé en ce que les moyens de blocage d'une bague (14, 16) comprennent des dents (42) formées en saillie sur la surface de la bague tournée vers la surface du tube (12, 10) associé à l'autre bague, cette surface de tube comprenant des rainures transversales (50, 52) dans lesquelles s'engagent les dents (42) précitées, quand les bagues sont en position de serrage.

7. Dispositif selon la revendication 6, caractérisé en ce que chaque dent (42) a un profil disymétrique, auquel correspond un profil disymétrique de la rainure (50, 52) pour autoriser un déplacement de la bague dans le sens correspondant au déploiement des tubes et interdire le déplacement de la bague en sens contraire.

8. Dispositif selon la revendication 5, caractérisé en ce que les moyens de blocage comprennent, sur la surface de la bague tournée vers la surface du tube associé à l'autre bague, une gorge annulaire à section en V disymétrique, comprenant une face oblique (62, 70) et une face (60, 68) perpendiculaire à l'axe des tubes, et des billes (58) logées dans cette gorge et venant au contact de la face oblique de la gorge et de ladite surface de tube.

9. Dispositif selon la revendication 8, caractérisé en ce qu'un joint torique (64) en matière élastiquement déformable est reçu dans le fond de ladite gorge.

10. Dispositif selon la revendication 5, caractérisé en ce que la surface de chaque bague (14, 16) opposée à la surface tronconique (18, 30) précitée, est elle-même de forme tronconique avec une conicité plus faible que celle de la première surface tronconique (18, 30) et s'applique en position de serrage des bagues sur une surface tronconique conjuguée formée sur la surface de tube en regard.

11. Dispositif selon l'une des revendications précédentes, caractérisé en ce que l'extrémité du tube externe (10) est formée par un embout vissé (54, 72) démontable pour permettre l'extraction du tube interne (12) et le déserrage des bagues (14, 16).

12. Dispositif selon l'ensemble des revendications 4 et 11, caractérisé en ce que l'embout vissé (54) comprend sur sa surface interne la gorge annulaire dans laquelle sont engagés les ergots (22) de la bague (14) associée au tube externe (10), et permet par dévissage l'extraction de la bague (14) et le déblocage des tubes.

13. Dispositif selon la revendication 11, caractérisé en ce que l'extrémité du tube interne (12) présentant l'épaulement (32) précité est formée par un embout vissé sur le tube.

**Patentansprüche**

1. Einrichtung zum automatischen Verriegeln teleskopischer Röhren in einer ausgefahrenen Position, die zwei Ringe (14, 16) aufweist, wobei der eine um ein Ende einer inneren Röhre (12) und der andere im Innern einer äußeren Röhre (10) an ihrem Ende angebracht ist, die von der inneren Röhre (12) durchsetzt ist und bei diesen Ringen der eine eine kegelstumpfartige innere Oberfläche (30) und der andere eine kegelstumpfartige äußere Oberfläche (18) aufweist, die einander so zugeordnet sind, daß die Ringe in einer zurückgezogenen Position der Röhren zueinander versetzt sind und die beiden Ringe in der ausgefahrenen Position der Röhren übereinander liegen und über ihre kegelstumpfartigen Oberflächen in Berührung stehen, wobei sie aufeinander und auf die Röhren gepreßt sind, um sie in dieser Position zu fixieren, dadurch gekennzeichnet, daß jeder Ring (14, 16) eine oder mehrere Längsschlitze (28) aufweist, die sein radiales Vergrößern und Verkleinern ermöglichen.

2. Einrichtung nach Anspruch 1, dadurch gekennzeichnet, daß der der äußeren Röhre (10) zugeordnete Ring (14) eine zylindrische innere Oberfläche und eine kegelstumpfartige äußere Oberfläche (18) aufweist, die sich auf der Seite des Endes der äußeren Röhre (10), das von der inneren Röhre (12) durchsetzt ist, ausweitet, wogegen der der inneren Röhre (12) zugeordnete Ring (16) eine zylindrische Oberfläche und eine kegelstumpfartige innere Oberfläche (30) aufweist, die jener (18) des anderen Rings (14) zugeordnet ist.

3. Einrichtung nach Anspruch 1 oder 2, dadurch gekennzeichnet, daß sich jeder Ring (14, 16) starr auf einem Vorsprung (20, 32) der ihm zugeordneten Röhre (10, 12) befindet.

4. Einrichtung nach einem der Ansprüche 1 bis 3 dadurch gekennzeichnet daß, jeder Ring (14, 16) bezüglich der zugeordneten Röhre (10, 12) frei verschiebbar angebracht ist und zumindest eine radiale vorspringende Nase (22, 34) aufweist, die in eine kreisförmige Rille oder einen kreisförmigen Hals (24, 36) der Röhre eingreift, um den Ring an dem Ende dieser Röhre zu halten.

5. Einrichtung nach einem der Ansprüche 1 bis 4, dadurch gekennzeichnet, daß jeder Ring (14, 16) Mittel (42, 56, 66) zum Verriegeln in einer Klemmposition aufweist, die in dieser Position mit der dem anderen Ring zugeordneten Röhre (12, 10) zusammenwirken.

6. Einrichtung nach Anspruch 5, dadurch gekennzeichnet, daß die Mittel zum Verriegeln eines Rings (14, 16) Zähne (42) aufweisen, die vorspringend an der Oberfläche des Ringes ausgebildet sind, der gegen die Oberfläche der dem anderen Ring zugeordneten Röhre (12, 10) gedreht ist, wobei diese Röhrenoberfläche Querrillen (50, 52) aufweist, in welche die Zähne (42) eingreifen, wenn die Ringe in einer eingeklemmten Position sind.

7. Einrichtung nach Anspruch 6, dadurch gekennzeichnet, daß jeder Zahn (42) ein unsymmetrisches Profil aufweist, dem ein unsymmetrisches Profil der Rille (50, 52) entspricht, um eine Verschiebung des Rings in die Richtung zu ermöglichen, welche dem Ausfahren der Röhren entspricht und um dar Verschieben des Rings in eine entgegengesetzte Richtung zu verhindern.

8. Einrichtung nach Anspruch 5, dadurch gekennzeichnet, daß die Mittel zum Verriegeln folgendes aufweisen: auf der Oberfläche des Rings, der gegen die Oberfläche der dem an deren Ring zugeordneten Röhre verdreht ist, einen ringförmigen Hals mit einem unsymmetrsichen V-förmigen Querschnitt, der eine schräge Fläche (62, 70) und eine zur Achse der Röhren senkrechte Fläche (60, 68) aufweist und Kugeln (58), die in diesem Hals aufgenommen sind und mit der schrägen Fläche des Halses und mit der Röhrenoberfläche in Berührung kommen.

9. Einrichtung nach Anspruch 8, dadurch gekennzeichnet, daß die ringförmige Dichtung (64) aus elatisch verformbarem Material am unteren Ende des Halses aufgenommen ist.

10. Einrichtung nach Anspruch 5, dadurch gekennzeichnet, daß die Oberfläche jedes Rings (14, 16), welche der kegelstumpfartigen Oberfläche (18, 30) gegenüberliegt, selbst eine kegelstumpfartige Form mit einer Konizität aufweist, die kleiner als jene der ersten kegelstumpfartigen Oberfläche (18, 30) ist, und in einer geklemmten Position der Ringe auf eine zugeordnete kegelstumpfartige Oberfläche paßt, die auf der zu betrachteten Röhrenoberfläche ausgebildet ist.

11. Einrichtung nach einem der vorgehenden Ansprüche, dadurch gekennzeichnet, daß das Ende der äußeren Röhre (10) von einem angeschraubten Endstück (54, 72) gebildet ist, das abgenommen werden kann, um das Ausziehen der inneren Röhre (12) und das Lockern der Ringe (14, 16) zu ermöglichen.

12. Einrichtung nach dem Satz der Ansprüche 4 und 11, dadurch gekennzeichnet, daß das angeschraubte Endstück (54) auf seiner inneren Oberfläche den ringförmigen Hals aufweist, in welchen die Nasen (22) des der äußeren Röhre (10) zugeordneten Rings (14) eingreifen und durch Abschrauben das Ausziehen des Rings (14) und die Freigabe der Röhren ermöglicht.

13. Einrichtung nach Anspruch 11, dadurch gekennzeichnet, daß das Ende der inneren Röhre (12) einen Ansatz (32) darstellt, der von einem auf die Röhre aufgeschraubten Endstück gebildet wird.

**Claims**

1. A device for automatically locking telescopic tubes in the deployed position, the device comprising two rings (14, 16), one mounted about an end of an inner tube (12), and the other mounted inside an outer tube (10) at its end through which the inner tube (12) passes, one of said rings having a frustoconical inside surface (30) and the other having a frustoconical outside surface (18), which surfaces are complementary to each other such that when the tubes are in the retracted position, the rings are spaced apart from each other, and when the tubes are in the deployed position the rings overlap and make contact with each other via their frustoconical surfaces, being clamped against each other and against the tubes to lock them in position, the device being characterized in that each ring (14, 16) includes one or more longitudinal slots (28) enabling it to expand and contract radially.

2. A device according to claim 1, characterized in that the ring (14) associated with the outer tube (10) has a cylindrical inside surface and a frustoconical outside surface (18) which flares from the end of the outer tube (10) through which the inner tube (12) passes, while the ring (16) associated with the inner tube (12) has a cylindrical outside surface and a frustoconical inside surface (30) which is complementary to the frustoconical surface (18) of the other ring (14).

3. A device according to claim 1 or 2, characterized in that each ring (14, 16) is in abutment against a shoulder (20, 32) of the tube (10, 12) with which it is associated.

4. A device according to any one of claims 1 to 3, characterized in that each ring (14, 16) is mounted free to move in translation relative to the associated tube (10, 12) and includes at least one projecting radial stud (22, 34) engaged in a circular groove (24, 36) of the tube to keep the ring at the end of the tube.

5. A device according to any one of claims 1 to 4, characterized in that each ring (14, 16) includes clamping position locking means (42, 56, 66) which co-operate in said position with the tube (12, 10) associated with the other ring.

6. A device according to claim 5, characterized in that the locking means of a ring (14, 16) comprise teeth (42) formed to project from the surface of the ring facing the surface of the tube (10, 12) associated with the other ring, said surface of the tube including transverse grooves (50, 52) in which the above-mentioned teeth (42) engage when the rings are in the clamping position.

7. A device according to claim 6, characterized in that each tooth (42) is asymmetrical in profile, which profile corresponds to an asymmetrical profile of the groove (50, 52) thereby enabling the ring to move in the direction corresponding to tube deployment and preventing the ring from moving in the opposite direction.

8. A device according to claim 5, characterized in that the locking means comprise, on the surface of the ring facing the surface of the tube associated with the other ring, an annular groove of asymmetrical V-section comprising a sloping face (62, 70) and a face (60, 68) perpendicular to the axis of the tubes, and balls (58) received in said groove and coming into contact with the sloping face of the groove and with said surface of the tube.

9. A device according to claim 8, characterized in that an O-ring (64) of resiliently deformable material is received in the bottom of said groove.

10. A device according to claim 5, characterized in that the surface of each ring (14, 16) opposite to the above-mentioned frustoconical surface (18, 30) is itself frustoconical in shape, having smaller conicity than that of the first frustoconical surface ( 18, 30 ) and pressing against a complementary frustoconical surface formed on the facing tube surface when the rings are in the clamping position.

11. A device according to any preceding claim, characterized in that the end of the outer tube (10) is formed with a screw endpiece (54, 72) that is removable to enable the inner tube (12) to be extracted and to enable the rings (14, 16) to be unclamped.

12. A device according to claims 4 and 11 together, characterized in that the screw endpiece (54) includes an annular groove in its inside surface in which the studs (22) of the ring (14) associated with the outer tube (10) are engaged, thereby enabling the ring (14) to be extracted and the tubes to be unlocked by unscrewing.

13. A device according to claim 11, characterized in that the end of the inner tube (12) having the above-mentioned shoulder (32) is formed by an endpiece screwed onto the tube.

FIG.1

FIG.2

FIG.3

FIG. 4

FIG.5

EP 0 336 837 B1

FIG.6

FIG.7

EP 0 336 837 B1